# EUROPEAN PATENT APPLICATION

(11) **EP 4 239 320 A1**
(43) Date of publication of application: **06.09.2023**
(21) Application number: 20812395.0
(22) Date of filing: 29.10.2020
(51) Int. Cl.: G01N 21/954

(54) **DEVICE AND PROCESS FOR INSPECTION OF AN INNER SURFACE OF A HOLLOW BODY**

(71) Applicant: CIN Advanced Systems Group S.L., 20500 Arrasate/Mondragon (ES)
(72) Inventor: MARINA JUAREZ, Jorge, 20500 Arrasate - Mondragon (ES); ALVAREZ GARCIA, Ignacio, 20500 Arrasate - Mondragon (ES)
(74) Representative: Igartua, Ismael
(86) International application number: PCT/ES2020/070663
(87) International publication number: WO 2022/090585

(57) **Abstract**

Device of inspection of an inner surface of a hollow body comprising an emitter (1) and a receiver (3) of a line of light (L1, L2), a tube (8) which is configured for being housed in the hollow body during the inspection, and optical means comprising at least one mirror (4, 5) which is arranged inside the upper end (9) of the tube (8), and mirrors (6, 7) which are arranged inside the lower end (10) of the tube (8), the mirror (4 or 5) is facing one opening (11) of the upper end (9) for reflecting the line (L1) emitted by the emitter (1) and directing it towards the mirror (6), or it is facing another opening (12) of the upper end (9) for receiving the line (L2) reflected by the inner surface from the mirror (7) and directing it towards the receiver (3), the mirror (6) is facing one opening (13) of the lower end (10) for receiving the line (L1) emitted by the emitter (1) and directing it onto the inner surface, and the mirror (7) is facing the opening (13) of the lower end (10) for reflecting the line (L2) reflected by the inner surface and directing it towards the receiver (3).

## Description

### TECHNICAL FIELD

The present invention relates to devices and methods of inspection of inner surfaces of hollow bodies.

### PRIOR ART

Inspecting the surface of parts for detecting surface defects by means of devices of inspection based on laser triangulation having an emitter of a line of light sent over the surface to be inspected, and a receiver capturing an image of the line of light reflected by the surface that is subsequently processed for detecting defects is known in the industry.

When the inner surface of a hollow body is to be inspected in which, due to space limitations, it is impossible to access with a device of inspection, devices of inspection having a tube which is introduced in the hollow body and also having optical means directing the light from an emitter, arranged outside the hollow body, towards the inner surface and directing the light reflected by the inner surface towards a receiver, also arranged outside the hollow body are known to be used. EP0267705A2 shows a device solving this problem.

EP0267705A2 shows a device of inspection of an inner surface of a hollow body comprising an emitter for emitting a line of light onto the inner surface, a receiver for receiving the line of light reflected by the inner surface, optical means for directing the line of light emitted by the emitter towards the inner surface and directing the line of light reflected by the inner surface towards the receiver, and a tube having an upper end and a lower end which is configured for being housed in the hollow body during the inspection.

### DISCLOSURE OF THE INVENTION

The object of the invention is to provide a device and a method of inspection of an inner surface of a hollow body, as defined in the claims.

One aspect of the invention relates to a device of inspection of an inner surface of a hollow body comprising an emitter for emitting a line of light onto the inner surface, a receiver for receiving the line of light reflected by the inner surface, optical means for directing the line of light emitted by the emitter towards the inner surface and directing the line of light reflected by the inner surface towards the receiver, and a tube having an upper end and a lower end which is configured for being housed in the hollow body during the inspection, and an axial axis extending from the upper end to the lower end. The upper end of the tube has a first upper opening which is facing the emitter for the passage of the line of light emitted by the emitter and a second upper opening which is facing the receiver for the passage of the line of light reflected by the inner surface, and the lower end of the tube has a lower opening which during inspection is facing the inner surface for the passage of the line of light emitted by the emitter and of the line of light reflected by the inner surface. The optical means comprise at least one upper plane mirror which is arranged inside the upper end of the tube, and first and second lower plane mirrors which are arranged inside the lower end of the tube, the upper plane mirror is facing the first upper opening for reflecting the line of light emitted by the emitter and directing it towards the first lower plane mirror, or is facing the second upper opening for receiving the line of light reflected by the inner surface from the second lower plane mirror and directing it towards the receiver, the first lower plane mirror is facing the lower opening for receiving the line of light emitted by the emitter and directing it onto the inner surface, and the second lower plane mirror is facing the lower opening for reflecting the line of light reflected by the inner surface and directing it towards the receiver.

Another aspect of the invention relates to a method of inspection of an inner surface of a hollow body using the device described above. The method comprises emitting from the emitter a line of light onto the inner surface, generating a vertical translation of the tube with respect to the inner surface of the hollow body, generating a rotation of the tube with respect to the inner surface of the hollow body, capturing in the receiver an image of the line of light reflected by the inner surface, and processing the captured image to obtain the topography of the inner surface.

The tube of the device has in its interior all the mirrors needed for conducting the light from the emitter to the inner surface of the hollow body, and from the inner surface to the receiver. This simplifies the calibration of the device and the versatility of use of the device for inspecting different hollow bodies, since the position of the mirrors inside the tube is kept fixed regardless of the movements the tube has to make to perform the inspection. The tube of the device of EP0267705A2 has optical means for sending light from the emitter and reflecting it towards the receiver outside the tube, which makes it necessary to calibrate the emitter and the receiver every time the device has to be moved to inspect a new hollow body.

Furthermore, the tube of the device has at its upper end independent openings for emitting the line of light and for receiving the line of light reflected by the inner surface, which prevents the lines of light from going along the same optical path as they travel through the inside of the tube, thus simplifying the optical means needed for performing the inspection, such that only plane mirrors are required for conducting the light. EP0267705A2 has a single opening at its upper end for sending and receiving light along one and the same optical path and requires using beam combiners, beam splitters, and mirrors with apertures, complicating the optical assembly and making the device more expensive.

Accordingly, a device for inspecting inner surfaces of hollow bodies which only requires using plane mirrors for conducting the light is obtained; it is therefore a device with a simple and low-cost structuration.

These and other advantages and features of the invention will become apparent in view of the figures and the detailed description of the invention.

### DESCRIPTION OF THE DRAWINGS

Figure 1 shows a perspective view of an embodiment of the device of inspection.
Figure 2 shows an enlarged schematic view of the upper end and lower end of the tube of the device of the previous figure in which the optical means arranged inside the tube can be observed.
Figures 3 and 4 show side views of the device of Figure 1.
Figures 5 and 6 show the optical path followed by the light between the emitter and the receiver of the device.
Figure 7 shows a perspective diagram of the line of light emitted by the emitter and reflected on the inner surface.

### DETAILED DISCLOSURE OF THE INVENTION

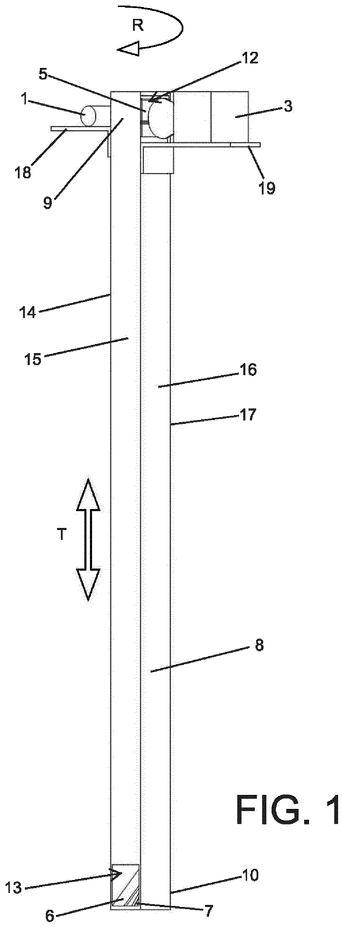

Figure 1 shows an embodiment of the device of inspection of an inner surface 2 of a hollow body according to the invention. The device comprises an emitter 1 for emitting a line of light L1 onto the inner surface 2, a receiver 3 for receiving the line of light L2 reflected by the inner surface 2, optical means for directing the line of light L1 emitted by the emitter 1 towards the inner surface 2 and directing the line of light L2 reflected by the inner surface 2 towards the receiver 3, and a tube 8 having an upper end 9 and a lower end 10 which is configured for being housed in the hollow body during the inspection.

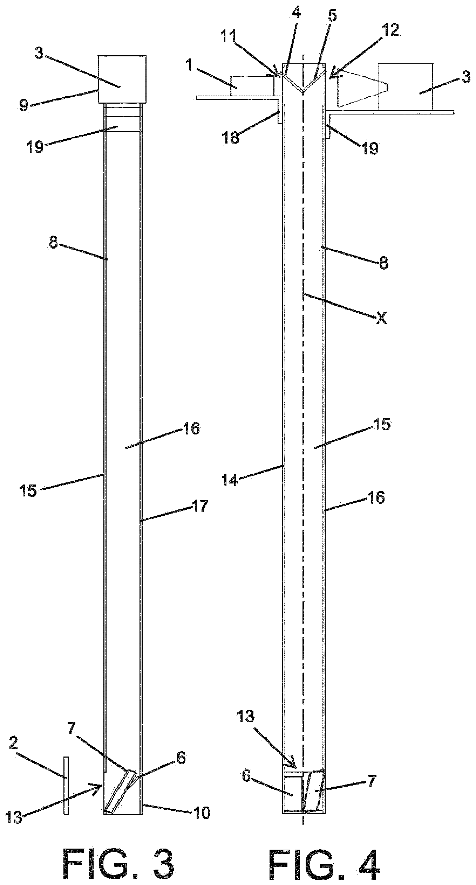

The tube 8 has an axial axis X extending from the upper end 9 to the lower end 10. The axial axis X extends vertically through the center of the tube 8, as shown in Figure 4.

The upper end 9 of the tube 8 has a first upper opening 11 which is facing the emitter 1 for the passage of the line of light L1 emitted by the emitter 1 and a second upper opening 12 which is facing the receiver 3 for the passage of the line of light L2 reflected by the inner surface 2. The lower end 10 of the tube 8 has a lower opening 13 which during inspection is facing the inner surface 2 for the passage of the line of light L1 emitted by the emitter 1 and of the line of light L2 reflected by the inner surface 2.

Preferably, the optical means comprise at least three plane mirrors which are arranged inside the tube 8. The optical means comprise at least one upper plane mirror 4 or 5 which is arranged inside the upper end 9 of the tube 8, and first and second lower plane mirrors 6 and 7 which are arranged inside the lower end 10 of the tube 8.

The upper plane mirror 4 or 5 is facing the first upper opening 11 for reflecting the line of light L1 emitted by the emitter 1 and directing it towards the first lower plane mirror 6, or is facing the second upper opening 12 for receiving the line of light L2 reflected by the inner surface 2 from the second lower plane mirror 7 and directing it towards the receiver 3. The first lower plane mirror 6 is facing the lower opening 13 for receiving the line of light L1 emitted by the emitter 1 and directing it onto the inner surface 2. The second lower plane mirror 7 is facing the lower opening 13 for reflecting the line of light L2 reflected by the inner surface 2 and directing it towards the receiver 3.

According to this embodiment, a single upper plane mirror 4 or 5 which is arranged inside the upper end 9 of the tube 8, and two lower plane mirrors 6 and 7 which are arranged inside the lower end 10 of the tube 8 are used. According to a first alternative, the emitter 1 is arranged parallel to the axial axis X of the tube 8 for directly emitting the line of light L1 in a manner parallel to the axial axis X of the tube 8 through the first opening 11, and the receiver 3 is arranged perpendicular to the axial axis X of the tube 8 for receiving the line of light L2 reflected by the upper plane mirror 5 in a manner perpendicular to the axial axis of the tube 8 through the second opening 12. According to a second alternative, the emitter 1 is arranged perpendicular to the axial axis X of the tube 8 for emitting the line of the light L1 towards the upper plane mirror 4 in a manner perpendicular to the axial axis X of the tube 8 through the first opening 11, and the receiver 3 is arranged parallel to the axial axis X of the tube 8 for directly receiving the line of light L2 reflected by the inner surface 2 in a manner parallel to the axial axis X of the tube 8 (these arrangements are not depicted in the figures).

Even more preferably, as shown in the embodiment of the figures, the optical means comprise four plane mirrors 4, 5, 6, and 7 which are arranged inside the tube 8. The optical means comprise first and second upper plane mirrors 4 and 5 which are arranged inside the upper end 9 of the tube 8, and first and second lower plane mirrors 6 and 7 which are arranged inside the lower end 10 of the tube 8.

The first upper plane mirror 4 is facing the first upper opening 11 for reflecting the line of light L1 emitted by the emitter 1 and directing it towards the first lower plane mirror 6. The second upper plane mirror 5 is facing the second upper opening 12 for receiving the line of light L2 reflected by the inner surface 2 from the second lower plane mirror 7 and directing it towards the receiver 3. The first lower plane mirror 6 is facing the lower opening 13 for receiving the line of light L1 reflected by the first upper plane mirror 4 and directing it onto the inner surface 2. The second lower plane mirror 7 is facing the lower opening 13 for reflecting the line of light L2 reflected by the inner surface 2 and directing it towards the second upper plane mirror 5.

In the embodiment of the figures, the optical means consist of the four plane mirrors 4, 5, 6, and 7 which are arranged inside the tube 8. Accordingly, the tube 8 exclusively has four plane mirrors, and no additional reflective element in the tube 8 is required for conducting the light from the emitter 1 to the receiver 3, which simplifies the manufacture of the tube 8 and reduces the cost of the device.

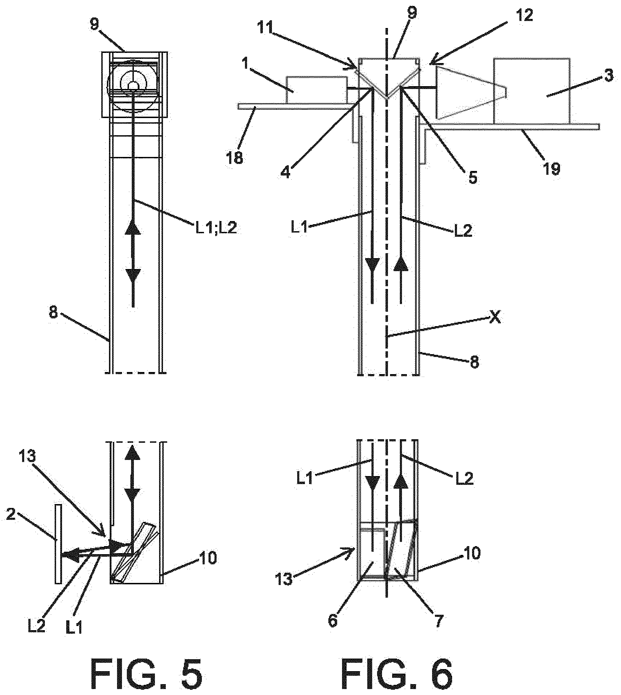

As can be observed in detail in Figures 5 and 6, the first upper plane mirror 4 is vertically aligned with the first lower plane mirror 6 for defining a first optical axis of the line of light L1 emitted which is parallel to the axial axis X of the tube 8, and the second upper plane mirror 5 is vertically aligned with the second lower plane mirror 7 for defining a second optical axis of the line of light L2 reflected which is parallel to the axial axis X of the tube 8. The first optical axis is independent of the second optical axis, such that two independent optical paths are established for emitting the line of light L1 from the emitter 1 to the inner surface 2, and for receiving the line of light L2 reflected by the inner surface 2 in the receiver 3. By using two separate optical paths, the light of one does not interfere with the other one, so it is not necessary to use complex optical means for conducting the light, where only plane mirrors can be used. When one and the same optical path is used for sending and receiving light, as in the case of EP0267705A2, it is necessary to use beam splitters and combiners, and therefore a more powerful emitter 1 so as not to lose light power.

The first opening 11 is arranged forming a 180° angle with respect to the second opening 12, and the third opening 13 is arranged forming a 90° angle with respect to the first opening 11 and the second opening 12. Thus the first opening 11 is diametrically opposite the second opening 12. The first upper plane mirror 4 is inclined with respect to the first opening 11 and oriented towards the first lower plane mirror 6, the second upper plane mirror 5 is inclined with respect to the second opening 12 and oriented towards the second lower plane mirror 7, the first lower plane mirror 6 is inclined with respect to the third opening 13 and oriented towards the first upper plane mirror 4, and the second lower plane mirror 7 is inclined with respect to the third opening 13 and oriented towards the second upper plane mirror 5, and it is also rotated with respect to the first lower plane mirror 6.

The rotation of the second lower plane mirror 7 depends on the distance between the lower opening 13 of the tube 8 and the inner surface 2 of the hollow body. The second lower plane mirror 7 is positioned at the lower end 10 of the tube 8 for directing the line of light L2 reflected by the inner surface 2 in a manner parallel to the axial axis X of the tube 8 towards the second upper plane mirror 5.

The emitter 1 is configured for emitting the line of light L1 on the first upper plane mirror 4 in a horizontal manner, such that the line of light L1 reflected by the first lower plane mirror 6 is projected onto the inner surface 2 in a vertical manner.

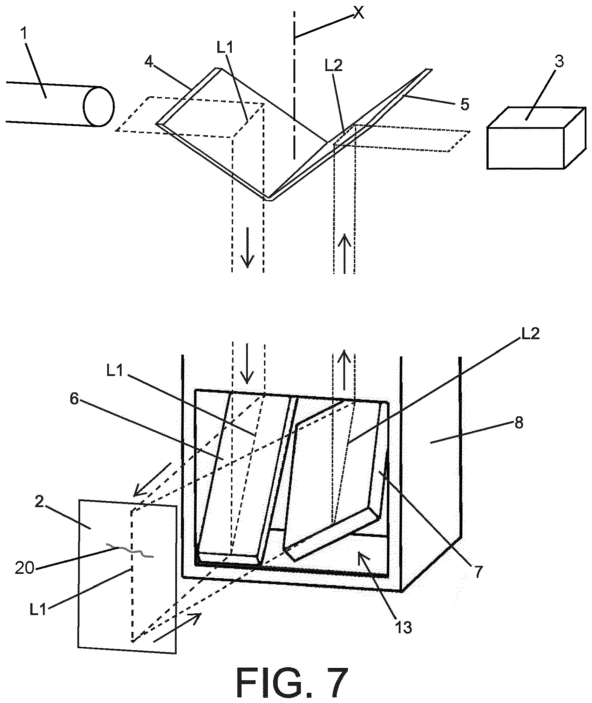

As observed in the perspective diagram of Figure 7, the emitter 1 emits a horizontal line of light L1, said horizontal line is emitted perpendicular to the axial axis X of the tube 8 and is projected in the first upper plane mirror 4 in a horizontal manner. The horizontal line of light L1 travels parallel to the axial axis X of the tube 8 between the first upper plane mirror 4 and the first lower plane mirror 6. The horizontal line of light L1 is projected in the first lower plane mirror 6 as an inclined vertical line, and said inclined vertical line is reflected in a manner perpendicular to the axial axis X of the tube 8 and is projected onto the inner surface 2 of the hollow body in a substantially vertical manner. Projecting the line of light L1 in a vertical manner improves the detection of circumferential defects in the inner surface 2 of the hollow body. For example, if the hollow body is a hole machined by means of a rotary cutting tool generating helices on the inner surface 2, the projection of the line of light in a vertical manner allows defects 20 to be detected in a direction perpendicular to the axial axis of the machined hole.

The tube 8 is a hollow rectangular body with four side faces 14, 15, 16, and 17. The first side face 14 has the first upper opening 11, the second side face 15 has the lower opening 13, and the third side face 16 has the second upper opening 12, the second side face 15 being placed between the first side face 14 and the third side face 16. This rectangular configuration simplifies the manufacture of the tube 8 and the arrangement of the mirrors inside the tube 8.

The mirrors 4, 5, 6, and 7 have a square or rectangular plane shape. The mirrors have a front face with a reflective surface, a rear face, and four minor faces joining the front face with the rear face.

The mirrors are "first surface" mirrors. That is, the mirrors have their reflective surface facing the line of light. The reflective surface can be a reflective layer arranged on the front face, such as a metallic layer for example. Alternatively, the mirror can be made of a reflective material.

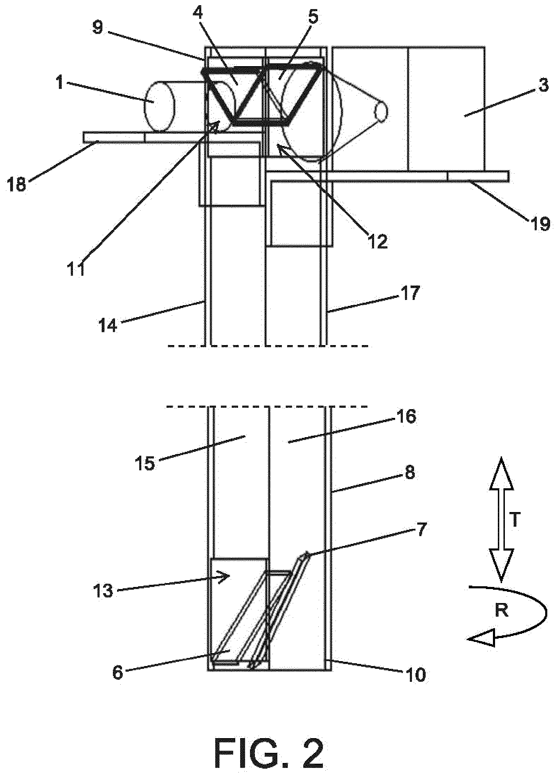

As can be observed in the schematic view of Figure 2, the first upper plane mirror 4 is attached to the second and fourth side faces 15 and 17 of the tube 8, and the second upper plane mirror 5 is also attached to the second and fourth side faces 15 and 17 of the tube 8. For example, the mirrors 4 and 5 can be adhered to the side faces 15 and 17 of the tube 8 by two of their opposing minor faces. Furthermore, the upper plane mirrors 4 and 5 are arranged at the upper end 9 of the tube 8 forming a V-shaped arrangement. This arrangement of the mirrors 4 and 5 makes it easier to assembly the mirrors at the upper end 9 of the tube 8 and allows there to be a more rigid assembly, such that the risk of the mirrors becoming misaligned in the event of impacts on the tube 8 is minimized.

The first upper plane mirror 4 is inclined 45° with respect to the first side face 14, the second upper plane mirror 5 is inclined 45° with respect to the third side face 16, the first lower plane mirror 6 is inclined 45° with respect to the second side face 15, and the second lower plane mirror 7 is inclined 45° with respect to the second side face 15, and it is rotated a certain angle with respect to the first lower plane mirror 6. The light is emitted from the emitter 1 in a manner perpendicular to the axial axis X of the tube 8, travels parallel to the axial axis X of the tube 8, and is projected onto and reflected by the inner surface 2 in a manner substantially perpendicular to the axial axis X of the tube 8, travels again parallel to the axial axis X of the tube 8, and is reflected in a manner perpendicular to the axial axis X of the tube 8 towards the receiver 3 (see Figures 5 and 6). The light is thereby reflected at angles of 90°, the optical path of the light being reduced.

The emitter 1 is attached to the first side face 14 of the tube 8 by means of a first L-shaped support 18, the emitter 1 being perpendicular to the axial axis X of the tube 8, and the receiver 3 is attached to the third side face 16 by means of a second L-shaped support 19, the receiver 3 being perpendicular to the axial axis X of the tube 8. The first support 18 has a vertical wing which is attached to the first side face 14 of the tube 8 and a horizontal wing which is attached to the emitter 1. The second support 19 has a vertical wing which is attached to the third side face 16 of the tube 8 and a horizontal wing which is attached to the receiver 3. The rigid attachment of the emitter 1 and the receiver 3 to the tube 8 ensures that the optical path of the light does not experience alterations, such that misalignments between the emitter 1, the receiver 3, and the mirrors 4, 5, 6, and 7 requiring recalibration of the device do not take place.

The first and second lower plane mirrors 6 and 7 are preferably arranged in a removable support having means for being coupled to the inside of the lower end 10 of the tube 8. Different removable supports with mirrors 6 and 7 rotated at different angles based on the inner surface 2 to be inspected can thereby be used, without having to replace the tube 8. Tubes 8 of a different length are used depending on the depth of the hollow body to be inspected.

The emitter 1 is a laser emitter, or an LED emitter with focusing lens. A laser emitter is preferably used because it makes it easier to focus the line of light, but when using coherent light resolution may be lost due to the Speckle noise effect. The LED emitter does not use coherent light and does not present this problem, but currently to create a line of light as narrow as a laser emitter does, LED technology requires using more power.

To inspect the entire inner surface 2 of the hollow body, or several different areas of the hollow body, it is necessary to generate a movement between the hollow body and the tube 8. Accordingly, the device additionally comprises translation means for generating a vertical translation T of the tube 8 with respect to the inner surface 2 of the hollow body and rotation means for generating a rotation R of the tube 8 with respect to the inner surface 2 of the hollow body.

According to a possible alternative, the translation and rotation means are an articulated robot having an arm with a free end where the upper end 9 of the tube 8 is coupleable. For example, a six-axis articulated robot can be used, such that the arm of the robot can move and rotate the tube 8 during the inspection of the inner surface 2.

The relative translation T and rotation R between the tube 8 and the hollow body can be performed in different ways. For example, if the hollow body is stationary, the translation and rotation means translate and rotate the tube 8 while the hollow body is stationary. If the tube 8 is stationary, the translation and rotation means translate and rotate the hollow body while the tube 8 is stationary. It is also possible to vertically translate the tube 8 and rotate the hollow body, or vertically translate the hollow body and rotate the tube 8.

The method of inspection comprises emitting from the emitter 1 a line of light L1 onto the inner surface 2, generating a vertical translation T of the tube 8 with respect to the inner surface 2 of the hollow body, generating a rotation R of the tube 8 with respect to the inner surface 2 of the hollow body, capturing in the receiver 3 an image of the line of light L2 reflected by the inner surface 2, and processing the captured image to obtain the topography of the inner surface 2. The technique used for processing the captured image is laser triangulation.

The vertical translation T is preferably parallel to the axial axis X of the tube 8 and the rotation R is performed on the axial axis X of the tube 8.

Given that a line of light vertical is projected onto the surface 2 of the hollow body, with only one rotation of the tube 8 with respect to the hollow body an area of the inner surface 2 can be scanned; however, to completely inspect the inner surface 2, or several areas of the inner surface 2, it is necessary to combine the vertical translational movements T and rotational movements R.

According to a possible alternative, the vertical translation T and the rotation R of the tube 8 with respect to the inner surface 2 are performed simultaneously, such that a helical light profile is projected onto the inner surface 2.

According to another possible alternative, the vertical translation T and the rotation R of the tube 8 with respect to the inner surface 2 are performed in an alternating manner, by means of vertical translational movements of the tube 8 with respect to the inner surface 2 alternating with rotational movements of the tube 8 with respect to the inner surface 2, such that annular light profiles are projected onto the inner surface 2.

## Claims

1. Device of inspection of an inner surface of a hollow body, comprising an emitter (1) for emitting a line of light (L1) onto the inner surface (2), a receiver (3) for receiving the line of light (L2) reflected by the inner surface (2), optical means for directing the line of light (L1) emitted by the emitter (1) towards the inner surface (2) and directing the line of light (L2) reflected by the inner surface (2) towards the receiver (3), and a tube (8) having an upper end (9) and a lower end (10) which is configured for being housed in the hollow body during the inspection, and an axial axis (X) extending from the upper end (9) to the lower end (10), **characterized in that** the upper end (9) of the tube (8) has a first upper opening (11) which is facing the emitter (1) for the passage of the line of light (L1) emitted by the emitter (1) and a second upper opening (12) which is facing the receiver (3) for the passage of the line of light (L2) reflected by the inner surface (2), and the lower end (10) of the tube (8) has a lower opening (13) which during inspection is facing the inner surface (2) for the passage of the line of light (L1) emitted by the emitter (1) and of the line of light (L2) reflected by the inner surface (2), and **in that** the optical means comprise at least one upper plane mirror (4, 5) which is arranged inside the upper end (9) of the tube (8), and first and second lower plane mirrors (6, 7) which are arranged inside the lower end (10) of the tube (8), the upper plane mirror (4, 5) is facing the first upper opening (11) for reflecting the line of light (L1) emitted by the emitter (1) and directing it towards the first lower plane mirror (6), or is facing the second upper opening (12) for receiving the line of light (L2) reflected by the inner surface (2) from the second lower plane mirror (7) and directing it towards the receiver (3), the first lower plane mirror (6) is facing the lower opening (13) for receiving the line of light (L1) emitted by the emitter (1) and directing it onto the inner surface (2), and the second lower plane mirror (7) is facing the lower opening (13) for reflecting the line of light (L2) reflected by the inner surface (2) and directing it towards the receiver (3).

2. Device according to claim 1, wherein the optical means comprise first and second upper plane mirrors (4, 5) which are arranged inside the upper end (9) of the tube (8), and the first and the second lower plane mirrors (6, 7) which are arranged inside the lower end (10) of the tube (8), the first upper plane mirror (4) is facing the first upper opening (11) for reflecting the line of light (L1) emitted by the emitter (1) and directing it towards the first lower plane mirror (6), the second upper plane mirror (5) is facing the second upper opening (12) for receiving the line of light (L2) reflected by the inner surface (2) from the second lower plane mirror (7) and directing it towards the receiver (3), the first lower plane mirror (6) is facing the lower opening (13) for receiving the line of light (L1) reflected by the first upper plane mirror (4) and directing it onto the inner surface (2), and the second lower plane mirror (7) is facing the lower opening (13) for reflecting the line of light (L2) reflected by the inner surface (2) and directing it towards the second upper plane mirror (5).

3. Device according to claim 2, wherein the first upper plane mirror (4) is vertically aligned with the first lower plane mirror (6) for defining a first optical axis of the line of light (L1) emitted which is parallel to the axial axis (X) of the tube (8), and the second upper plane mirror (5) is vertically aligned with the second lower plane mirror (7) for defining a second optical axis of the line of light (L2) reflected which is parallel to the axial axis (X) of the tube (8).

4. Device according to claim 2 or 3, wherein the first opening (11) is arranged forming a 180° angle with respect to the second opening (12), and the third opening (13) is arranged forming a 90° angle with respect to the first opening (11) and the second opening (12), the first upper plane mirror (4) is inclined with respect to the first opening (11) and oriented towards the first lower plane mirror (6), the second upper plane mirror (5) is inclined with respect to the second opening (12) and oriented towards the second lower plane mirror (6), the first lower plane mirror (6) is inclined with respect to the third opening (13) and oriented towards the first upper plane mirror (4), and the second lower plane mirror (7) is inclined with respect to the third opening (13) and oriented towards the second upper plane mirror (5), and it is also rotated with respect to the first lower plane mirror (6).

5. Device according to any of claims 2 to 4, wherein the emitter (1) is configured for emitting the line of light (L1) on the first upper plane mirror (4) in a horizontal manner, such that the line of light (L1) reflected by the first lower plane mirror (6) is projected onto the inner surface (2) in a vertical manner.

6. Device according to any of claims 2 to 5, wherein the tube (8) is a hollow rectangular body with four side faces (14,15,16,17), the first side face (14) has the first upper opening (11), the second side face (15) has the lower opening (13), and the third side face (16) has the second upper opening (12), the second side face (15) being placed between the first side face (14) and the third side face (16).

7. Device according to claim 6, wherein the first upper plane mirror (4) is inclined 45° with respect to the first side face (14), the second upper plane mirror (5) is inclined 45° with respect to the third side face (16), the first lower plane mirror (6) is inclined 45° with respect to the second side face (15), and the second lower plane mirror (7) is inclined 45° with respect to the second side face (15), and it is rotated a certain angle with respect to the first lower plane mirror (6).

8. Device according to claim 6 or 7, wherein the first upper plane mirror (4) is attached to the second and fourth side faces (15, 17), and the second upper plane mirror (5) is attached to the second and fourth side faces (15, 17).

9. Device according to claim 6, 7, or 8, wherein the emitter (1) is attached to the first side face (14) of the tube (8) by means of a first L-shaped support (18), the emitter (1) being perpendicular to the axial axis (X) of the tube 8, and the receiver (3) is attached to the third side face (16) by means of a second L-shaped support (19), the receiver (3) being perpendicular to the axial axis (X) of the tube 8.

10. Device according to any of the preceding claims, wherein the first and second lower plane mirrors (6, 7) are arranged in a removable support having means for being coupled to the inside of the lower end (10) of the tube (8).

11. Device according to any of the preceding claims, further comprising translation means for generating a vertical translation (T) of the tube (8) with respect to the inner surface (2) of the hollow body and rotation means for generating a rotation (R) of the tube (8) with respect to the inner surface (2) of the hollow body.

12. Device according to the preceding claim, wherein the translation and rotation means are an articulated robot having an arm with a free end where the upper end (9) of the tube (8) is coupleable.

13. Method of inspection of an inner surface of a hollow body, using a device according to any one of the preceding claims, wherein the method comprises emitting from the emitter (1) a line of light (L1) onto the inner surface (2), generating a vertical translation (T) of the tube (8) with respect to the inner surface (2) of the hollow body, generating a rotation (R) of the tube (8) with respect to the inner surface (2) of the hollow body, capturing in the receiver (3) an image of the line of light (L2) reflected by the inner surface (2), and processing the captured image to obtain the topography of the inner surface (2).

14. Method according to claim 13, wherein the vertical translation (T) and the rotation (R) of the tube (8) with respect to the inner surface (2) are performed simultaneously, such that a helical light profile is projected onto the inner surface (2).

15. Method according to claim 13, wherein the vertical translation (T) and the rotation (R) of the tube (8) with respect to the inner surface (2) is performed in an alternating manner, by means of vertical translational movements of the tube (8) with respect to the inner surface (2) alternating with rotational movements of the tube (8) with respect to the inner surface (2), such that annular light profiles are projected onto the inner surface (2).
